# EUROPÄISCHE PATENTSCHRIFT

(11) **EP 3 035 032 B1**
(45) Veröffentlichungstag und Bekanntmachung des Hinweises auf die Patenterteilung: **05.08.2020**
(21) Anmeldenummer: 15194680.3
(22) Anmeldetag: 16.11.2015
(51) Int. Cl.: G01N 17/00, B01L 1/02

(54) **SIMULATIONSSCHRANK**
SIMULATING CABINET
ARMOIRE DE SIMULATION

(30) Priorität: 16.12.2014 DE 102014118787
(43) Veröffentlichungstag der Anmeldung: 22.06.2016
(73) Patentinhaber: Binder GmbH, 78532 Tuttlingen (DE)
(72) Erfinder: DEMIRKAYA, Vedat, 63785 Obernburg (DE); MATTES, Marco, 78532 Tuttlingen (DE); HÜPPING, Martin, 78247 Hilzingen (DE); MÜLLER, Ulf Christian, 5416 Kirchdorf AG (CH)
(74) Vertreter: Westphal, Mussgnug & Partner Patentanwälte mbB

(56) Entgegenhaltungen:
- WO-A1-2009/022847
- WO-A1-2012/062679
- DE-A1- 4 116 500
- JP-A- 2003 047 460
- US-A1- 2014 110 391

## Beschreibung

Die Erfindung betrifft einen Simulationsschrank gemäß dem Oberbegriff des Patentanspruchs 1.

Simulationsschränke werden in wissenschaftlichen oder industriellen Laboren zur Simulation von biologischen, chemischen und/oder physikalischen Umwelteinflüssen verwendet. Bei der Simulation von Umwelteinflüssen spielt die bei dem Simulationsschrank eingesetzte Luftführung eine entscheidende Rolle, um in dem Schrank eine homogene Luftverteilung und damit eine entsprechende Temperaturverteilung zu ermöglichen.

Ein Simulationsschrank als Labor-Wärmeschrank ist aus DE 41 16 500 A1 bekannt. Bei den bekannten Simulationsschränken ist um einen Innenkessel eine Vorwärmekammer mit einem integrierten, leistungsstarken Heiz-/Kühlsystem aufweisend eine Heiz-/Kühlvorrichtung und einen Lüfter gelegt. Luft-Leitbleche sorgen dafür, dass der gesamte Luftstrom über die Heiz- bzw. Kühlelemente geführt wird und anschließend großflächig und kontrolliert über Luftöffnungen in den Seitenwänden in den Innenraum eintritt. Durch das Einführen der Luft über die gesamten Seitenwände soll verhindert werden, dass störenden Verwirbelungen erzeugt werden und durch diese eine optimale Homogenität der Temperatur in dem Innenkessel nicht erreicht wird.

Die bekannten Simulationsschränke weisen einen komplizierten Aufbau zur Erzeugung einer Homogenität der Temperatur in einem Innenraum auf.

Die Aufgabe der Erfindung besteht daher darin, einen Simulationsschrank bereitzustellen, der einen einfachen Aufbau aufweist und eine verbesserte Luftführung und damit vorteilhafterweise eine gleichmäßige Temperaturverteilung in einem Innenraum des Simulationsschranks ermöglicht.

Die Aufgabe der Erfindung wird gelöst durch einen Simulationsschrank mit den Merkmalen des Patentanspruchs 1.

Vorteilhafte Ausgestaltungen und Weiterbildungen der Erfindung sind in den Unteransprüchen angegeben.

Der erfindungsgemäße Simulationsschrank mit zwei Seitenwänden, einer Bodenwand, einer Deckenwand, einer Außenwand und einem Innenraum, mit einer in dem Innenraum in einem Abstand zur Außenwand angeordneten Rückwand, und wenigstens einen zwischen Rückwand und Außenwand angeordneten Lüfter, wobei die Rückwand zum Ansaugen von Luft aus dem Innenraum mittels des Lüfters Lüfteröffnungen aufweist, zeichnet sich dadurch aus, dass die Rückwand wenigstens eine Öffnung aufweist und dass zwischen der Rückwand und der Außenwand an diesen jeweils anliegend wenigstens eine erste Drosselblende derart angeordnet ist, dass die von dem Lüfter durch die Lüfteröffnungen der Rückwand angesaugte Luft nach Durchströmen der Drosselblende durch die wenigstens eine Öffnung in den Innenraum leitbar ist. Die Drosselblende bewirkt eine Drosselung der durch die Drosselblende durchströmenden Luft. Nach Durchströmen der Drosselblende expandiert die Luft. Für die Luft nach Durchströmen der Drosselblendestellt sich damit ein relativ zur Luft vor der Drosselblende niedrigerer Druck ein. Der mittlere Teilchenabstand der Luftbestandteile erhöht sich durch die Expansion, was in einer Änderung der Temperatur der Luft resultiert. Eine vor der Drosselblende bestehende inhomogene Temperaturverteilung der Luft wird durch das Passieren der Drosselblende vergleichmäßigt. Somit wird Luft mit vergleichmäßigter Temperaturverteilung durch die Öffnung in den Innenraum geleitet, was zu einer verbesserten Homogenität der Temperatur in dem Innenraum führt.

Vorteilhafterweise sind zwischen der Rückwand und der Außenwand zwei Drosselblenden, vorteilhafterweise beidseitig des Lüfters, angeordnet. Mit einer derartigen Anordnung kann eine symmetrische Anordnung der Drosselblenden bezüglich des Lüfters erreicht werden.

Vorzugsweise sind die Rückwand und wenigstens eine der wenigstens einen Drosselblende einstückig miteinander verbunden. Eine derartige Anordnung erleichtert den Aufbau eines Simulationsschranks.

In einer weiteren Ausgestaltung der Erfindung weist wenigstens eine der wenigstens einen Drosselblende im Wesentlichen eine Länge auf, die einem Abstand zwischen der Bodenwand und der Deckenwand des Simulationsschranks entspricht. Eine derartige Drosselblende erstreckt sich entlang einer gesamten Ausdehnung der Rückwand und der Außenwand entlang einer Bodenwand-Deckenwand-Richtung. Es existiert daher kein Abschnitt zwischen der Rückwand und der Außenwand in Bodenwand-Deckenwand-Richtung, durch den Luft ohne zuvorige Drosselung durch die Öffnung in den Innenraum geleitet wird. Damit wird der Effekt einer vergleichmäßigten Verteilung von Luft in dem Innenraum zusätzlich begünstigt.

Wenigstens eine der wenigstens einen Drosselblende kann vorzugsweise in einem Winkel von im Wesentlichen 90° jeweils zu der Rückwand und der Außenwand angeordnet sein. Ein Luftstrom, der parallel zu einer Seitenwand-Seitenwand-Richtung strömt, trifft senkrecht auf eine derartig angeordnete Drosselblende. Mit einer Drosselblende, die in einem Winkel von im Wesentlichen 90° jeweils zu der Rückwand und der Außenwand angeordnet ist, kann eine Durchmischung der Luft nach Durchströmen der Drosselblende minimiert werden.

Gemäß einer bevorzugten Ausgestaltung der Erfindung ist wenigstens eine der wenigstens einen Drosselblende als Lochblende ausgebildet. Lochblenden sind einfach und kostengünstig zu fertigen.

Gemäß einer bevorzugten Weiterbildung der Erfindung weist die Rückwand mehrere Öffnungen auf, die in Umgebungen von Schnittpunkten von Rückwandseitenkanten, d.h. in Ecken, angeordnet sind, wobei eine Längenausdehnung der Umgebungen im Wesentlichen kleiner als ein Drittel der Länge einer Rückwandseitenkante ist. Öffnungen in Ecken der Rückwand begünstigen ein schnelleres Einstellen einer homogenen Temperaturverteilung in dem Innenraum.

Vorzugsweise weist wenigstens eine der wenigstens einen Öffnungen in einer Bodenwand-Deckenwand-Richtung jeweils eine größere Ausdehnung auf als in einer Seitenwand-Seitenwand-Richtung. Derartig geschlitzte Öffnungen ermöglichen eine verbesserte Verteilung der Luft in dem Nutzraum.

Gemäß einer bevorzugten Ausgestaltung der Erfindung weist die Rückwand in einer Umgebung jedes Schnittpunktes von Rückwandseitenkanten jeweils wenigstens eine Öffnung, vorzugsweise wenigstens ein Paar von Öffnungen auf, wobei ein Paar wenigstens zwei in Seitenwand-Seitenwand-Richtung beabstandete, vorzugsweise im Wesentlichen parallel ausgerichtete, Öffnungen aufweist. Eine derartige Anordnung ermöglicht eine vergleichmäßigte Verteilung von Luft in dem Innenraum.

Besonders vorzugsweise sind in einer Umgebung eines ersten, zweiten und dritten Schnittpunktes von Rückwandseitenkanten jeweils genau ein Paar von Öffnungen und in einer Umgebung eines vierten Schnittpunktes von Rückwandseitenkanten mehrere Paare von Öffnungen, vorzugsweise drei, angeordnet, wobei in der Umgebung des vierten Schnittpunktes die Paare in Bodenwand-Deckenwand-Richtung beabstandet angeordnet sind. Eine derartige Anordnung kann eine asymmetrische Verteilung von Luft durch den Lüfter ausgleichen.

Vorzugsweise weist jedes Paar der Paare in der Umgebung des vierten Schnittpunktes zu einer zur Bodenwand-Deckenwand-Richtung parallel verlaufenden Rückwandseitenkante im Wesentlichen einen jeweils gleichen Abstand auf. Eine derartige Anordnung kann eine vergleichmäßigte Verteilung von Luft in dem Innenraum weiter verbessern.

Vorteilhafterweise sind die benachbarten Paare der Paare in der Umgebung des vierten Schnittpunktes in Bodenwand-Deckenwand-Richtung jeweils gleich beabstandet. Eine derartige Anordnung kann eine vergleichmäßigte Verteilung von Luft in dem Innenraum weiter verbessern.

Vorteilhafterweise weisen die Öffnungen im Wesentlichen jeweils einen gleich großen Flächeninhalt auf. Mit derartigen Öffnungen kann eine vergleichmäßigte Verteilung der Luft in dem Innenraum verbessert werden.

In einer weiteren Ausgestaltung der Erfindung ist an der Rückwand ein Luftführungselement angeordnet, welches mit einer ersten Seitenkante an der Rückwand und mit einer zweiten Seitenkante an wenigstens einer der wenigstens einen Drosselblende angeordnet ist. Ein derartiges Luftführungselement dient zur Umlenkung der die Drosselblende durchströmenden Luft in Richtung auf die Öffnungen der Rückwand.

Vorzugsweise liegt bei einem Einbau der Rückwand und wenigstens einer der wenigstens einen Drosselblende in dem Simulationsschrank die erste Seitenkante des Luftführungselements an einer Seitenwand des Simulationsschranks und die zweite Seitenkante des Luftführungselements an der Außenwand des Simulationsschranks an. Eine derartige Anordnung des Luftführungselements begünstigt die Luftführung.

Vorzugsweise schließt das Luftführungselement mit der Rückwand und der angrenzenden Drosselblende jeweils einen Winkel von im Wesentlichen 45° ein. Eine derartige Anordnung des Luftführungselements ermöglicht eine Umlenkung der parallel zu einer Rückwandseitenkante strömenden auf das Luftführungselement auftreffenden Luft um 90°. Die durch die Öffnungen in den Innenraum umgelenkte Luft kann dann parallel zu den Seitenwandflächen strömen, was eine homogene Temperaturverteilung in dem Innenraum begünstigen kann.

In einer weiteren Ausgestaltung der Erfindung ist zwischen Rückwand und Deckenwand wenigstens ein Schlitz angeordnet. Durch einen derartigen Schlitz kann zusätzlich zu den Öffnungen in der Rückwand Luft in den Innenraum strömen.

Vorzugsweise sind zwischen Rückwand und Bodenwand wenigstens ein, vorzugsweise zwei Schlitze angeordnet. Durch einen derartigen Schlitz kann zusätzlich zu den Öffnungen in der Rückwand Luft in den Innenraum strömen.

Gemäß einer bevorzugten Ausgestaltung der Erfindung ist wenigstens eine Heizungsvorrichtung zwischen Rückwand und Außenwand angeordnet, die den Lüfter umgibt, wobei die Heizungsvorrichtung den Lüfter vorzugsweise spiralförmig oder ringförmig umgibt. Eine derartige Heizungsvorrichtung kann die von dem Lüfter durch die Lufteröffnungen der Rückwand angesaugte Luft gleichmäßig erwärmen.

Vorteilhafterweise ist der Lüfter von einer ersten und einer zweiten Heizungsvorrichtung umgeben, wobei die zweite Heizungsvorrichtung den Lüfter und die erste Heizungsvorrichtung umgibt. Durch derartige Heizungsvorrichtungen kann eine verbeserte Erwärmung der Luft sichergestellt werden.

Vorzugsweise sind die erste Heizungsvorrichtung spiralförmig und die zweite Heizungsvorrichtung ringförmig ausgebildet. Eine derartige Ausbildung der Heizungsvorrichtungen kann die nächst zuvor genannte Erwärmung der Luft weiter verbessern.

Alternativ zu wenigstens einer Heizungsvorrichtung kann die Erfindung auch eine Kühlungsvorrichtung vorsehen, ohne dass die Grundausführung der Erfindung wesentlich verändert werden müsste.

In einer Weiterbildung der Erfindung sind zwischen der Rückwand und der Außenwand mehrere Lüfter angeordnet, wobei zwischen den Lüftern jeweils eine Trennwand angeordnet ist. Mehrere Lüfter sind insbesondere bei großen Simulationsschränken vorteilhaft. Die Trennwände verhindern eine gegenseitige Beeinflussung der Luftströme benachbarter Lüfter.

Die Erfindung wird anhand der nachfolgenden Figuren ausführlich erläutert. Es zeigen:
- Figur 1: eine perspektivische Ansicht eines Ausführungsbeispiels eines Simulationsschranks,
- Figur 2: eine Ansicht von vorne eines Ausführungsbeispiels einer Rückwand eines Simulationsschranks gemäß Figur 1,
- Figur 3: eine Ansicht von hinten der Rückwand gemäß Figur 2,
- Figur 4: einen Teilschnitt des Simulationsschranks gemäß Figur 1 mit einer perspektivischen Darstellung einer Luftströmung in dem Simulationsschrank,
- Figur 5: eine perspektivische Detaildarstellung einer Luftströmung im Bereich eines Ausführungsbeispiels einer Drosselblende des Simulationsschranks nach Figur 1,
- Figur 6: einen Ausschnitt einer perspektivischen Ansicht des Simulationsschranks nach Figur 1,
- Figur 7: einen weiteren Ausschnitt einer perspektivischen Ansicht des Simulationsschranks nach Figur 1,
- Figur 8: eine teilweise geschnittene perspektivische Ansicht des Simulationsschranks nach Figur 1 mit einem Ausführungsbeispiel eines Lüfters und mit einem Ausführungsbeispiel einer Heizvorrichtung und
- Figur 9: eine Ansicht von vorne auf ein Ausführungsbeispiel einer Rückwand eines Ausführungsbeispiels eines Simulationsschranks mit zwei Lüftern.

In den einzelnen Figuren bezeichnen gleiche Bezugszeichen gleiche Bezugselemente. Zur besseren Übersicht werden in den einzelnen Figuren nur die relevanten Bezugselemente mit Bezugszeichen gekennzeichnet.

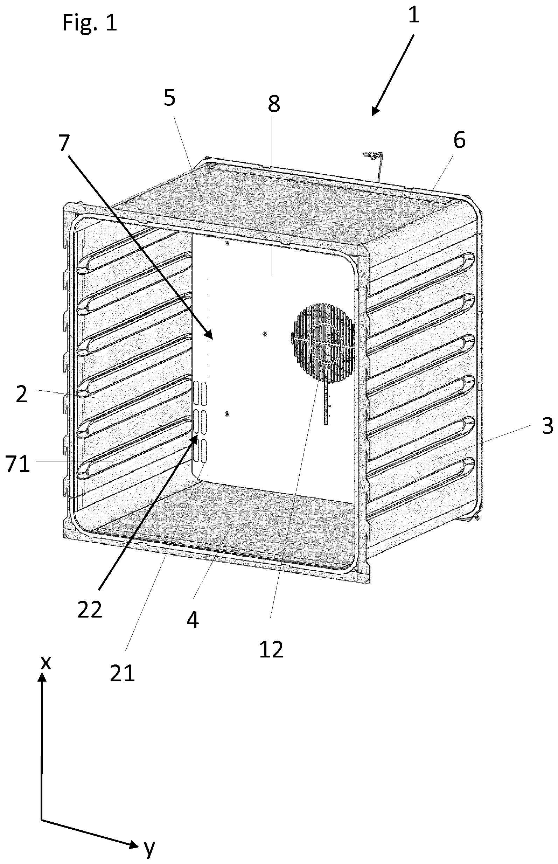

Figur 1 zeigt eine perspektivische Ansicht in den Innenraum 7 eines Ausführungsbeispiels eines Simulationsschranks 1. Der Innenraum 7 wird von einer Deckenwand 5, einer der Deckenwand 5 gegenüberliegenden Bodenwand 4, zwei gegenüberliegenden Seitenwänden 2, 3, einer Rückwand 8 und einer der Rückwand 8 gegenüberliegenden, hier nicht dargestellten Tür begrenzt. Die Seitenwände 2, 3 können jeweils Sicken 71 aufweisen. In oder auf diesen Sicken 71 können Gitter und/oder Bleche aufgelegt werden. Die Begrenzungswände 2, 3, 4, 5, 8 des Simulationsschranks 1 sind im Wesentlichen jeweils rechtwinklig zueinander angeordnet, wobei der Simulationsschrank 1 die Form eines Quaders oder eines Würfels aufweisen kann. Die Ecken des Simulationsschrankes 1 können abgerundet sein.

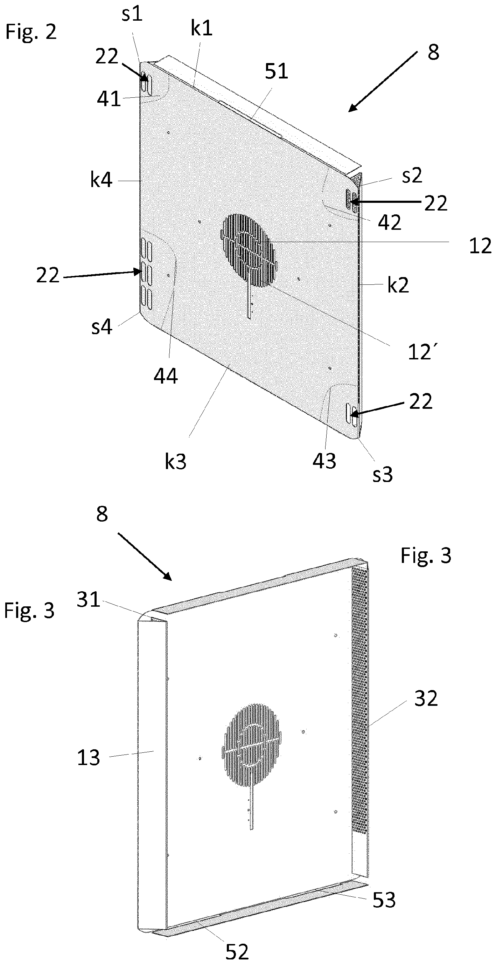

Die Rückwand 8 ist in den Figuren 2 und 3 dargestellt. Figur 2 zeigt eine Hinteransicht, Figur 3 eine Vorderansicht der Rückwand 8. In der Rückwand 8 sind Lüfteröffnungen 12 angeordnet. Die Lüfteröffnungen bilden insbesondere eine Gitterstruktur. Die Lüfteröffnungen 12 sind beispielsweise als in einer Bodenwand - Deckenwand - Richtung x parallel zueinander verlaufende Schlitze 12' ausgebildet, die symmetrisch um einen Punkt, beispielsweise einen Mittelpunkt, der Rückwand 8 angeordnet sein können. Die Schlitze 12' können in einem kreisförmigen Bereich angeordnet sein.

Hier und im Folgenden bezeichnet die Bodenwand - Deckenwand - Richtung x eine Gerade, die die Bodenwand 4 und die Deckenwand 5 jeweils senkrecht schneidet. Hier und im Folgenden bezeichnet die Seitenwand - Seitenwand - Richtung y eine Gerade, die die Seitenwände 2, 3 jeweils senkrecht schneidet.

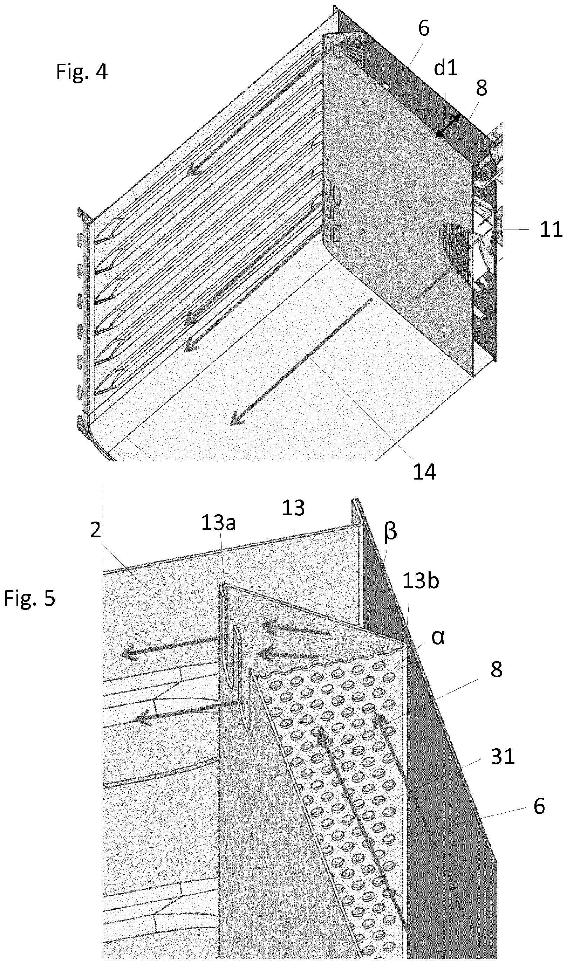

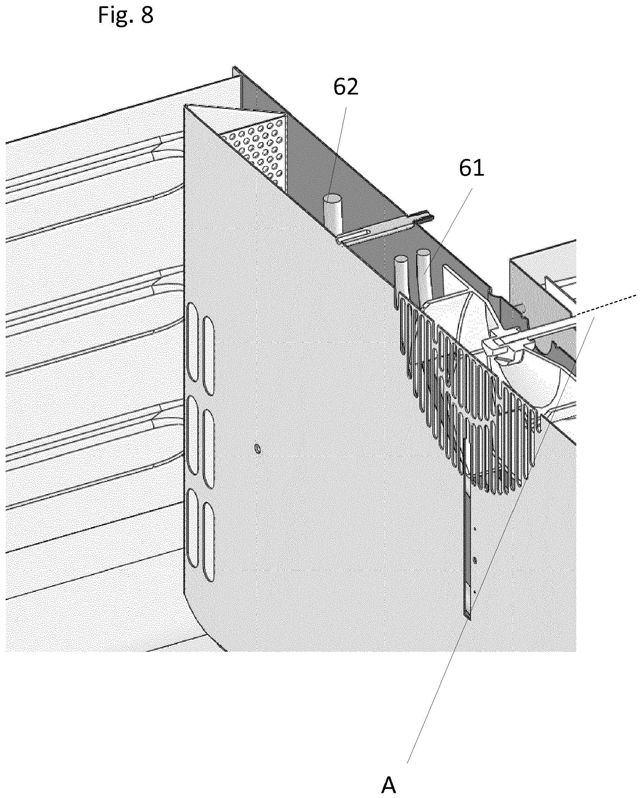

Durch die Lüfteröffnungen 12 in der Rückwand 8 saugt ein in beispielsweise den Figuren 4, 8 dargestellter Lüfter 11 Luft aus dem Innenraum 7 an. Der Lüfter 11 befindet sich zwischen der Rückwand 8 und einer von der Rückwand 8 in einem Abstand d1 angeordneten Außenwand 6 (vgl. Figur 4) unmittelbar hinter den Lüfteröffnungen 12. Der Lüfter 11 kann ein üblicher Ventilator sein, der durch Rotation Unterdruck erzeugt, wodurch Luft angesaugt werden kann. Eine Drehachse A des Lüfters 11 ist insbesondere senkrecht zu der Rückwand 8 angeordnet. Die angesaugte Luft wird von dem Lüfter insbesondere radial abgegeben und strömt damit anschließend im wesentlichen parallel zur Rückwand 8.

Der Lüfter 11 kann von einer ersten Heizungsvorrichtung 61 und/oder einer zweiten Heizungsvorrichtung 62 umgeben sein, wie insbesondere in Figur 8 erkennbar. Im dargestellten Ausführungsbeispiel sind sowohl die erste als auch die zweite Heizungsvorrichtung 61, 62 vorhanden. Die erste Heizungsvorrichtung 61 umgibt den Lüfter 11 und ist insbesondere spiralförmig, beispielsweise mit zwei Wicklungen, ausgebildet. Die zweite Heizungsvorrichtung 62 umgibt den Lüfter 11 und die erste Heizungsvorrichtung 61 und ist beispielsweise als Ring ausgebildet, weist demzufolge nur eine Wicklung auf. Die zweite Heizungsvorrichtung 62 ist insbesondere derart angeordnet, dass in axialer Richtung die eine Wicklung der zweiten Heizungsvorrichtung 62 zwischen den beiden Wicklungen der ersten Heizungsvorrichtung 61 angeordnet ist. Dadurch wird eine besonders gleichmäßige Erwärmung der Luft erreicht, indem die Luft zunächst von der spiralförmigen ersten Heizungsvorrichtung 61 und anschließend von der ringförmigen zweiten Heizungsvorrichtung 62 erwärmt wird. Alternativ kann der Lüfter 11 auch nur von einer Heizungsvorrichtung 61, 62 umgeben sein.

Mittels der Heizungsvorrichtungen 61, 62 kann die Luft auf eine wählbare Temperatur erwärmt werden. Alternativ zu Heizungsvorrichtungen können je nach Simulationserfordernissen auch Kühlungsvorrichtungen vorgesehen sein, um die Luft auf eine wählbare Temperatur abzukühlen.

Zwischen Rückwand 8 und Außenwand 6 ist wenigstens eine Drosselblende 31 angeordnet, wobei eine Breite der Drosselblende 31 dem Abstand d1 zwischen Rückwand 8 und Außenwand 6 entsprechen kann. Die Drosselblende 31 ist zu der Außenwand 6 in einem Winkel a,welcher insbesondere ein rechter Winkel ist, angeordnet. Vorteilhafterweise sind zwei Drosselblenden 31, 32 beidseitig des Lüfters 11, insbesondere symmetrisch zum Lüfter 11, angeordnet sein.

Die aus dem Innenraum 7 in den Raum zwischen Rückwand 8 und Außenwand 6 vom Lüfter 11 angesaugte Luft wird durch den Lüfter 11 auf die Drosselblenden 31, 32 geleitet, die beispielsweise in Figur 3 dargestellt sind. Figur 5 zeigt eine Detailansicht der Drosselblende 31. Die in der Figur 5 dargestellten Pfeile sollen den Luftstrom 14 verdeutlichen. Nachfolgende Beschreibung gilt für die Drosselblende 32 analog. Die Drosselblende 31 kann als Blech mit einer Vielzahl von Öffnungen, welche beispielsweise ausgestanzt und/oder kreisrund sind, ausgebildet sein. Insbesondere kann die Drosselblende 31 als Lochblende ausgebildet sein. Dabei kann die Drosselblende 31 vorzugsweise eine Länge aufweisen, die dem Abstand zwischen Bodenwand 4 und Deckenwand 5 entspricht.

Zwischen der Drosselblende 31 und der nächstgelegenen Seitenwand 2 ist ein Luftführungselement 13 angeordnet. Das Luftführungselement 13 kann als ein Blech ausgebildet sein. Das Luftführungselement 13 ist derart angeordnet, dass bei einem Einbau der Rückwand 8 und der Drosselblende 31 in den Simulationsschrank 1 eine erste Seitenkante 13a des Luftführungselements 13 an der Seitenwand 2 des Simulationsschranks 1 und eine zweite Seitenkante 13b des Luftführungselements 13 an der Außenwand 6 des Simulationsschranks 1 anliegend angeordnet ist. Beispielsweise schließt das Luftführungselement 13 mit der Außenwand 6 und der Seitenwand 2 einen Winkel ein, beispielsweise jeweils einen Winkel β von beispielsweise 45° ein. Die durch die Drosselblende 31 in Seitenwand - Seitenwand - Richtung y strömende Luft kann von dem Luftführungselement 13 im Wesentlichen um 90° umgelenkt werden, vgl. Figuren 3 und 5. Das Luftführungselement 13 leitet Luft, welche beispielsweise die Drosselblende 31 im Wesentlichen senkrecht durchströmt, in eine Richtung parallel zu den Seitenwänden 2, 3 um, wie die in Figur 5 dargestellten Pfeile verdeutlichen.

Die Rückwand 8, die Drosselblenden 31, 32 und das Luftführungselement 13 sind vorteilhafterweise fest miteinanderverbunden und können beispielsweise einstückig ausgebildet sein. Beispielsweise ist die Rückwand 8 an der ersten Seitenkante 13a des Luftführungselements 13 einstückig angeordnet, wobei das Luftführungselement 13 in einem Winkel von beispielsweise 45° gegen die Rückwand 8 abgebogen ist, insbesondere hin zur Außenwand 6. An der zweiten Seitenkante 13b des Luftführungselements 13 ist einstückig die Drosselblende 31 angeordnet, wobei die Drosselblende 31 in einem Winkel von beispielsweise 45° gegen das Luftführungselement 12 gebogen ist, insbesondere zur Rückwand 8 hin, so dass insgesamt die Drosselblende 31 in einem im Wesentlichen rechten Winkel zur Rückwand 8 steht.

Damit Luft aus dem Raum zwischen Rückwand 8 und Außenwand 6 in den Innenraum 7 gelangen kann, weist die Rückwand 8 wenigstens eine Öffnung 21 auf, die derart angeordnet ist, dass die von dem Lüfter 11 durch die Lüfteröffnungen 12 der Rückwand 8 angesaugte Luft nach Durchströmen der Drosselblende 31 durch die Öffnung 21 in den Innenraum 7 leitbar ist. Die Drosselblenden 31, 32 sind somit zwischen den Lüfteröffnungen 12 einerseits und den Öffnungen 21 andererseits an der Rückwand 8 angeordnet. Die Rückwand 8 weist insbesondere mehrere Öffnungen 21 auf, wie besonders aus Figur 2 hervorgeht. Die Öffnungen 21 sind beispielsweise jeweils als Schlitze ausgebildet, die in der Bodenwand - Deckenwand - Richtung x eine größere Ausdehnung aufweisen als in der Seitenwand - Seitenwand - Richtung y. Jeweils zwei Öffnungen 21 können ein Paar 22 von Öffnungen bilden, wobei bei einem Paar 22 die Schlitze parallel in Bodenwand - Deckenwand - Richtung x verlaufen. Bei einer Rückwand 8, die in jeder Ecke mindestens ein Paar 22 von Öffnungen 21 aufweist, erweisen sich zwei Drosselblenden 31, 32, die beidseitig des Lüfters 11 angeordnet sind, als besonders vorteilhaft.

In einem Ausführungsbeispiel ist in Umgebungen 41, 42, 43 eines ersten Schnittpunktes s1, zweiten Schnittpunktes s2 und dritten Schnittpunktes s3 von Rückwandseitenkanten k1, k2, k3, k4, d.h. von Ecken der Rückwand 8, jeweils genau ein Paar 22 von Öffnungen 21 angeordnet. In einer Umgebung 44 eines vierten Schnittpunktes s4 der Rückwandseitenkanten k3, k4 sind drei Paare 22 von Öffnungen 21 angeordnet, wobei ein Abstand zwischen zwei benachbarten Paaren 22 in Bodenwand - Deckenwand - Richtung x jeweils gleich sein kann. Mit einer derartigen asymmetrischen Anordnung von Paaren 22 von Öffnungen 21 in der Rückwand 8 kann eine asymmetrische Luftverteilung des Lüfters 22 in dem Innenraum 7 ausgeglichen werden. Eine Längenausdehnung der Umgebungen 41, 42, 43, 44 ist vorzugsweise kleiner als 1/3 der Länge einer Rückwandseitenkante k1, k2, k3, k4.

Diese Längenausdehnung stellt sicher, dass die Öffnungen in Eckbereichen der Rückwand 8 angeordnet sind.

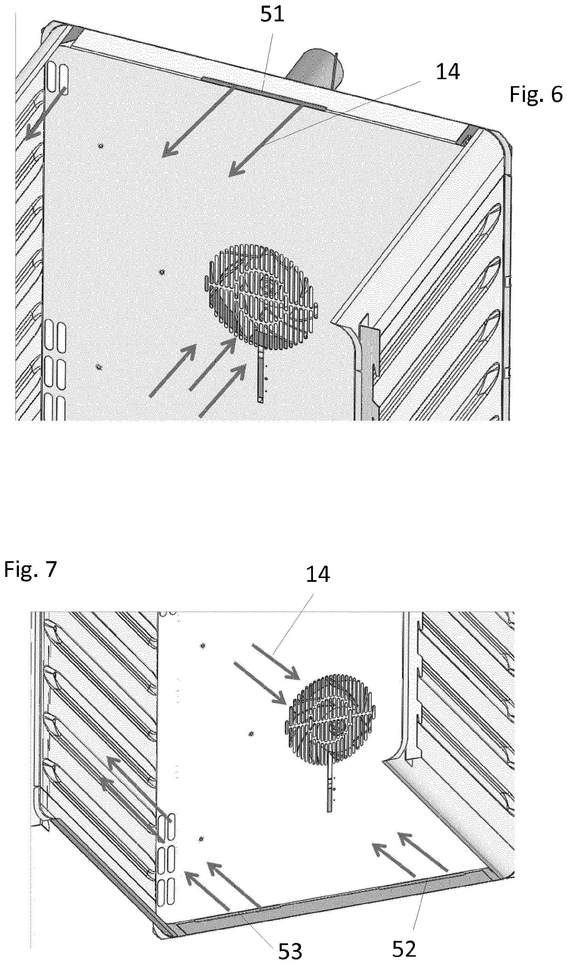

Es können zwischen Rückwand 8 und Deckenwand 5 und/oder zwischen Rückwand 8 und Bodenwand 4 Schlitze 51 bzw. 52, 53 angeordnet sein, durch die jeweils der Luftstrom 14 aus dem Raum zwischen Rückwand 8 und Außenwand 6 in den Innenraum 7 strömen kann. Die Figur 6 zeigt beispielsweise einen Schlitz 51 zwischen Rückwand 6 und Deckenwand 4. Die Figur 7 zeigt beispielsweise zwei Schlitze 52, 53 zwischen Rückwand 8 und Bodenwand 4.

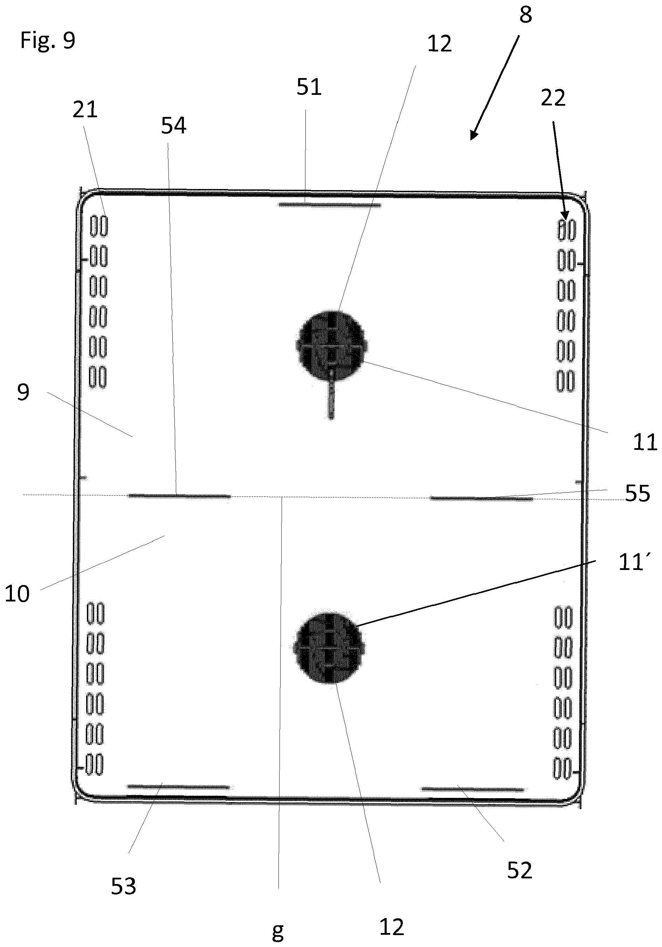

Es sind auch Simulationsschränke 1 denkbar, die mehrere Lüfter 11 zwischen der Rückwand 8 und der Außenwand 6 aufweisen. Figur 9 zeigt beispielsweise eine Rückwand 8 mit zwei Anordnungen von Lüfteröffnungen 12 gemäß Figuren 2, 3. Hinter jeder der Lüfteröffnungen 12 ist zwischen der Rückwand 8 und der Außenwand 6 ein Lüfter 11 bzw. 11' angeordnet, wobei zwischen den Lüftern 11 und 11' jeweils eine Trennwand angeordnet ist. Der Raum zwischen der Rückwand 8 und der Außenwand 6 kann durch die Trennwand, die beispielsweise in Seitenwand - Seitenwand - Richtung y verlaufen kann, in eine obere Kammer 9 und eine untere Kammer 10 aufgeteilt sein. Die Trennwand kann beispielsweise als ein Winkelelement ausgebildet sein. In der oberen Kammer 9 ist unmittelbar hinter den Lüfteröffnungen 12 ein erster Lüfter 11 angeordnet. In der unteren Kammer 10 ist unmittelbar hinter den Lüfteröffnungen 12 ein zweiter Lüfter 11' angeordnet. Die obere Kammer 9 und die untere Kammer 10 können jeweils einen analogen Aufbau zu dem Simulationsschrank mit einem Lüfter 11 gemäß Figur 1 aufweisen. Mehrere Lüfter 11 sind insbesondere bei größeren Simulationsschränken 1 von Vorteil.

Die Rückwand 8 kann, vorzugsweise auf einer Geraden g angeordnete, Schlitze, vorzugsweise zwei Schlitze 54, 55, aufweisen. Die Schlitze 54, 55 sind insbesondere zwischen der Trennwand und der Lüfteröffnung 12 der oberen Kammer 9 angeordnet. Durch jeden der Schlitze 54, 55 kann der Luftstrom 14 aus dem Raum zwischen Rückwand 8 und Außenwand 6 in den Innenraum 7 strömen.

Figur 9 zeigt eine symmetrische Anordnung von Paaren 22 von Öffnungen 21 mit beispielsweise sechs Paaren 22 von Öffnungen 21 in jeder Ecke der Rückwand 8, wobei ein Abstand zwischen zwei benachbarten Paaren 22 in Bodenwand - Deckenwand - Richtung x jeweils gleich sein kann. Es sind aber auch andere, insbesondere asymmetrische, Anordnungen von Paaren 22 von Öffnungen 21 bei einem Simulationsschrank mit mehreren Lüftern 11 denkbar, insbesondere ähnlich wie für einen Simulationsschrank 1 mit einem Lüfter 11.

### Bezugszeichenliste

- 1: Simulationsschrank

- 2: Seitenwand
- 3: Seitenwand
- 4: Bodenwand
- 5: Deckenwand
- 6: Außenwand
- 7: Innenraum
- 8: Rückwand
- 9: Kammer
- 10: Kammer

- 11: Lüfter
- 11': Lüfter
- 12: Lüfteröffnungen
- 12': Schlitz
- 13: Luftführungselement
- 13a: Seitenkante
- 13b: Seitenkante
- 14: Luftstrom

- 21: Öffnung
- 22: Paar

- 31: Drosselblende
- 32: Drosselblende

- 41: Umgebung
- 42: Umgebung
- 43: Umgebung
- 44: Umgebung

- 51: Schlitz
- 52: Schlitz
- 53: Schlitz
- 54: Schlitz
- 55: Schlitz

- 61: Heizungsvorrichtung
- 62: Heizungsvorrichtung

- 71: Sicke

- d1: Abstand

- k1: Rückwandseitenkante
- k2: Rückwandseitenkante
- k3: Rückwandseitenkante
- k4: Rückwandseitenkante

- s1: Schnittpunkt
- s2: Schnittpunkt
- s3: Schnittpunkt
- s4: Schnittpunkt

- α: Winkel
- β: Winkel

- x: Richtung
- y: Richtung
- g: Gerade

- A: Drehachse

## Patentansprüche

1. Simulationsschrank (1) mit zwei Seitenwänden (2, 3), einer Bodenwand (4), einer Deckenwand (5), einer Außenwand (6) und einem Innenraum (7), mit einer in dem Innenraum (7) in einem Abstand (d1) zur Außenwand (6) angeordneten Rückwand (8), und wenigstens einen zwischen Rückwand (8) und Außenwand (6) angeordneten Lüfter (11), wobei die Rückwand (8) zum Ansaugen von Luft aus dem Innenraum (7) mittels des Lüfters (11) Lüfteröffnungen (12) aufweist,
**dadurch gekennzeichnet, dass**
die Rückwand (8) wenigstens eine Öffnung (21) aufweist und dass zwischen der Rückwand (8) und der Außenwand (6) an diesen jeweils anliegend wenigstens eine erste Drosselblende (31) derart angeordnet ist, dass die von dem Lüfter (11) durch die Lüfteröffnungen (12) der Rückwand (8) angesaugte Luft nach Durchströmen der Drosselblende (31) durch die Öffnung (21) in den Innenraum (7) leitbar ist.

2. Simulationsschrank (1) nach Anspruch 1,
**dadurch gekennzeichnet, dass**
zwischen der Rückwand (8) und der Außenwand (6) zwei Drosselblenden (31, 32) angeordnet sind.

3. Simulationsschrank (1) nach Anspruch 1 oder 2,
**dadurch gekennzeichnet, dass**
die Rückwand (8) und wenigstens eine der wenigstens einen Drosselblende (31, 32) einstückig miteinander verbunden sind.

4. Simulationsschrank (1) nach einem der vorangehenden Ansprüche,
**dadurch gekennzeichnet, dass**
wenigstens eine der wenigstens einen Drosselblende (31, 32) im Wesentlichen eine Länge aufweist, die einem Abstand zwischen der Bodenwand (4) und der Deckenwand (5) des Simulationsschranks (1) entspricht.

5. Simulationsschrank (1) nach einem der vorangehenden Ansprüche,
**dadurch gekennzeichnet, dass**
wenigstens eine der wenigstens einen Drosselblende (31, 32) in einem Winkel (α) von im Wesentlichen 90° jeweils zu der Rückwand (8) und der Außenwand (6) angeordnet ist.

6. Simulationsschrank (1) nach einem der vorangehenden Ansprüche,
**dadurch gekennzeichnet, dass**
wenigstens eine der wenigstens einen Drosselblenden (31, 32) als Lochbleche ausgebildet ist.

7. Simulationsschrank (1) nach einem der vorangehenden Ansprüche,
**dadurch gekennzeichnet, dass**
die Rückwand (8) mehrere Öffnungen (21) aufweist, die in Umgebungen (41, 42, 43, 44) von Schnittpunkten (s1, s2, s3, s4) von Rückwandseitenkanten (k1, k2, k3, k4) angeordnet sind, wobei eine Längenausdehnung der Umgebungen (41, 42, 43, 44) im Wesentlichen kleiner als 1/3 der Länge einer Rückwandseitenkante (k1, k2, k3, k4) ist.

8. Simulationsschrank (1) nach einem der vorangehenden Ansprüche,
**dadurch gekennzeichnet, dass**
wenigstens eine der wenigstens einen Öffnung (21) in einer Bodenwand - Deckenwand - Richtung (x) jeweils eine größere Ausdehnung aufweist als in einer Seitenwand - Seitenwand - Richtung (y).

9. Simulationsschrank (1) nach einem der vorangehenden Ansprüche,
**dadurch gekennzeichnet, dass**
die Rückwand (8) in einer Umgebung (41, 42, 43, 44) jedes Schnittpunktes (s1, s2, s3, s4) von Rückwandseitenkanten (k1, k2, k3, k4) jeweils wenigstens eine Öffnung (21), vorzugsweise ein Paar (22) von Öffnungen (21) aufweist, wobei ein Paar (22) wenigstens zwei in Seitenwand - Seitenwand - Richtung (y) beabstandete, vorzugsweise im Wesentlichen parallel ausgerichtete, Öffnungen (21) aufweist.

10. Simulationsschrank (1) nach Anspruch 9,
**dadurch gekennzeichnet, dass**
in einer Umgebung (41, 42, 43) eines ersten (s1), zweiten (s2) und dritten Schnittpunktes (s3) von Rückwandseitenkanten (k1, k2, k3, k4) jeweils genau ein Paar (22) von Öffnungen (21) und in einer Umgebung (44) eines vierten Schnittpunktes (s4) von Rückwandseitenkanten (k3, k4) mehrere Paare (22) von Öffnungen (21), vorzugsweise drei, angeordnet sind, wobei in der Umgebung (44) des vierten Schnittpunktes (s4) die Paare (22) in Bodenwand - Deckenwand - Richtung (x) angeordnet sind.

11. Simulationsschrank (1) nach Anspruch 10,
**dadurch gekennzeichnet, dass**
jedes Paar der Paare (22)in der Umgebung (44) des vierten Schnittpunktes (s4) zu einer zur Bodenwand - Deckenwand - Richtung (x) parallel verlaufenden Rückwandseitenkante (k2, k4) im Wesentlichen einen jeweils gleichen Abstand aufweist.

12. Simulationsschrank (1) nach Anspruch 10 oder 11,
**dadurch gekennzeichnet, dass**
benachbarte Paare der Paare (22) in der Umgebung (44) des vierten Schnittpunktes (s4) in Bodenwand - Deckenwand - Richtung (x) jeweils gleich beabstandet sind.

13. Simulationsschrank (1) nach einem der Ansprüche 7 bis 12, **dadurch gekennzeichnet, dass** die Öffnungen (21) im Wesentlichen jeweils einen gleich großen Flächeninhalt aufweisen.

14. Simulationsschrank () nach einem der vorangehenden Ansprüche,
**dadurch gekennzeichnet, dass**
an der Rückwand (8) ein Luftführungselement (13) angeordnet ist, welches mit einer ersten Seitenkante (13a) an der Rückwand (8) und mit einer zweiten Seitenkante (13b) an wenigsten einer der wenigsten einen Drosselblende (31, 32) angeordnet ist.

15. Simulationsschrank (1) nach Anspruch 14,
**dadurch gekennzeichnet, dass**
bei einem Einbau der Rückwand (8) und wenigstens einer der wenigsten einen Drosselblende (31, 32) in den Simulationsschrank (1) die erste Seitenkante (13a) des Luftführungelements (13) an einer Seitenwand (2, 3) des Simulationsschranks (1) und die zweite Seitenkante (13b) des Luftführungelements (13) an der Außenwand (6) des Simulationsschranks (1) anliegend angeordnet ist.

16. Simulationsschrank (1) nach einem der Ansprüche 14 bis 15,
**dadurch gekennzeichnet, dass**
das Luftführungselement (13) mit der Rückwand (8) und der angrenzenden Drosselblende (31, 32) jeweils einen Winkel (β) von im Wesentlichen 45° einschließt.

17. Simulationsschrank (1) nach einem der vorangehenden Ansprüche,
**dadurch gekennzeichnet, dass**
zwischen Rückwand (8) und Deckenwand (5) wenigstens ein Schlitz (51) angeordnet ist.

18. Simulationsschrank (1) nach einem der vorangehenden Ansprüche,
**dadurch gekennzeichnet, dass**
zwischen Rückwand (8) und Bodenwand (4) wenigstens ein, vorzugsweise zwei Schlitze (52, 53) angeordnet sind.

19. Simulationsschrank (1) nach einem der vorangehenden Ansprüche,
**dadurch gekennzeichnet, dass**
wenigstens eine Heizungsvorrichtung (61) zwischen Rückwand (8) und Außenwand (6) angeordnet ist, die den Lüfter (11) umgibt, wobei die Heizungsvorrichtung (61) den Lüfter (11) vorzugsweise spiralförmig oder ringförmig umgibt.

20. Simulationsschrank (1) nach Anspruch 19,
**dadurch gekennzeichnet, dass**
der Lüfter (11) von einer ersten (61) und einer zweiten Heizungsvorrichtung (62) umgeben ist, wobei die zweite Heizungsvorrichtung (62) den Lüfter (11) und die erste Heizungsvorrichtung (61) umgibt.

21. Simulationsschrank (1) nach Anspruch 20,
**dadurch gekennzeichnet, dass**
die erste Heizungsvorrichtung (61) spiralförmig und die zweite Heizungsvorrichtung (62) ringförmig ausgebildet sind.

22. Simulationsschrank (1) nach einem der vorangehenden Ansprüche,
**dadurch gekennzeichnet, dass**
die zwei gegenüberliegenden Seitenwände (2, 3) jeweils Sicken (71) zur Auflage von Gittern oder Blechen aufweisen.

23. Simulationsschrank (1) nach einem der vorangehenden Ansprüche,
**dadurch gekennzeichnet, dass**
zwischen der Rückwand (8) und der Außenwand (6) mehrere Lüfter (11, 11') angeordnet sind, wobei zwischen den Lüftern (11, 11') jeweils eine Trennwand angeordnet ist.

## Claims

1. Simulation chamber (1) having two lateral walls (2, 3), a bottom wall (4), a top wall (5), an outer wall (6) and an inner space (7) with a back wall (8) arranged at a distance (d1) to the outer wall (6) and with at least one ventilator (11) disposed between the back wall (8) and the outer wall (6), wherein the back wall (8) has ventilation openings for extracting air out of the inner space (7) by means of the ventilator (11),
**characterized in that** the back wall (8) has at least one opening (21) and that on these, between the back wall (8) and the outer wall (6), at least one first orifice plate (31) is abutting disposed such that the air drawn in through the ventilation openings (12) in the back wall (8) by the ventilator (11) can be conducted through the opening (21) in the inner space (7) after passing through the orifice plate (31).

2. Simulation chamber (1) in accordance with claim 1,
**characterized in that** two orifice plates (31) are disposed between the back wall (8) and the outer wall (6).

3. Simulation chamber (1) in accordance with claim 1 or 2,
**characterized in that** the back wall (8) and at least one of the at least one orifice plates (31, 32) are connected to each other in one piece.

4. Simulation chamber (1) in accordance with any of the preceding claims,
**characterized in that** at least one of the at least one orifice plates (31, 32) essentially comprises a length that corresponds to a distance between the bottom wall (4) and the top wall (5) of the simulation chamber (1).

5. Simulation chamber (1) in accordance with any of the preceding claims,
**characterized in that** at least one of the at least one orifice plates (31, 32) is arranged at an angle (α) of essentially 90° to both the back wall (8) and the outer wall (6).

6. Simulation chamber (1) in accordance with any of the preceding claims,
**characterized in that** at least one of the at least one orifice plates (31, 32) is implemented as a perforated plate.

7. Simulation chamber (1) in accordance with any of the preceding claims,
**characterized in that** the back wall (8) has numerous openings (21) that are arranged in the surrounding areas (41, 42, 43, 44) of intersections (s1, s2, s3, s4) of back wall lateral edges (k1, k2, k3, k4), where a longitudinal expansion of the surrounding areas (41, 42, 43, 44) is essentially smaller than 1/3 of the length of a back wall lateral edge (k1, k2, k3, k4).

8. Simulation chamber (1) in accordance with any of the preceding claims,
**characterized in that** at least one of the at least one openings (21) has a larger expansion in a bottom wall - top wall direction (x) than in a lateral wall - lateral wall direction (y).

9. Simulation chamber (1) in accordance with any of the preceding claims,
**characterized in that** each back wall (8) in a surrounding area (41, 42, 43, 44) of every intersection (s1, s2, s3, s4) of back wall lateral edges (k1, k2, k3, k4) has at least one opening (21), preferably a pair (22) of openings (21), wherein a pair (22) comprises at least two openings (21) spaced apart in a lateral wall - lateral wall direction (y), preferably essentially parallel.

10. Simulation chamber (1) in accordance with claim 9,
**characterized in that**, in each surrounding area (41, 42, 43) of a first (s1), second (s2) and third intersection (s3) of back wall lateral edges (k1, k2, k3, k4) exactly one pair (22) of openings (21) is arranged and in a surrounding area (44) of a fourth intersection (s4) of back wall lateral edges (k1, k2, k3, k4) numerous pairs (22) of openings (21) are arranged, preferably three, wherein, in the surrounding area (44) of the fourth intersection (s4), the pairs (22) are arranged in bottom wall - top wall direction (x).

11. Simulation chamber (1) in accordance with claim 10,
**characterized in that** every pair of the pairs (22) in the surrounding area (44) of the fourth intersection (s4) are disposed at the essentially same distance to the bottom wall lateral edge (k2, k4) extending parallel to the bottom wall - top wall direction (x).

12. Simulation chamber (1) in accordance with claim 10 or 11,
**characterized in that** neighboring pairs of the pairs (22) in the surrounding area (44) of the fourth intersection (s4) are equally spaced in bottom wall - top wall direction (x).

13. Simulation chamber (1) in accordance with any of claims 7 to 12,
**characterized in that** the openings (21) each comprise an essentially equal surface content.

14. Simulation chamber (1) in accordance with any of the preceding claims,
**characterized in that** a ventilation element (13) is disposed on the back wall (8) that is arranged with a first lateral edge (13a) on the back wall (8) and with a second lateral edge (13b) on at least one of the at least one orifice plates (31, 32).

15. Simulation chamber (1) in accordance with claim 14,
**characterized in that**, when the back wall (8) and at least one of the at least one orifice plates (31, 32) are installed in the simulation chamber (1), the first lateral edge (13a) of the ventilation element (13) is arranged abutting a lateral wall (2,3) of the simulation chamber (1) and the second lateral edge (13b) of the ventilation element (13) is arranged abutting the outer wall (6) of the simulation chamber (1).

16. Simulation chamber (1) in accordance with any of claims 14 to 15,
**characterized in that** the ventilation element (13) forms an angle (β) of essentially 45° with each of the back wall (8) and the neighboring orifice plate (31, 32).

17. Simulation chamber (1) in accordance with any of the preceding claims,
**characterized in that** at least one slot (51) is disposed between back wall (8) and top wall (5).

18. Simulation chamber (1) in accordance with any of the preceding claims,
**characterized in that** at least one, preferably two slots (52, 53) are disposed between back wall (8) and bottom wall (4).

19. Simulation chamber (1) in accordance with any of the preceding claims,
**characterized in that** at least one heating device (61) is disposed between back wall (8) and outer wall (6) that encompasses the ventilator (11), wherein the heating device (61) preferably encompasses the ventilator (11) in a spiral or ring-like shape.

20. Simulation chamber (1) in accordance with claim 19,
**characterized in that** the ventilator (11) is encompassed by a first (61) and by a second heating device (62), wherein the second heating device (62) encompasses the ventilator (11) and the first heating device (61).

21. Simulation chamber (1) in accordance with claim 20,
**characterized in that** the first heating device (61) is implemented in a spiral shape and the second heating element (62) is implemented in a ring shape.

22. Simulation chamber (1) in accordance with any of the preceding claims,
**characterized in that** the two opposing lateral walls (2, 3) each have creases (71) on which screens or plates can rest.

23. Simulation chamber (1) in accordance with any of the preceding claims,
**characterized in that** numerous ventilators (11, 11') are arranged between the back wall (8) and the outer wall (6), wherein a separating wall is arranged between each of the ventilators (11, 11').

## Revendications

1. Armoire de simulation (1) comportant deux parois latérales (2, 3), une paroi de dessous (4), une paroi de dessus (5), une paroi extérieure (6) et un volume intérieur (7), une paroi arrière (8) située à une distance (d1) de la paroi extérieure (6) et au moins un ventilateur (11) entre la paroi arrière (8) et la paroi extérieure (6),
la paroi arrière (8) comportant des orifices de ventilation (12) pour aspirer l'air du volume intérieur (7) à l'aide du ventilateur (11),
armoire **caractérisée en ce que**
la paroi arrière (8) comporte au moins une ouverture (21), et
entre la paroi arrière (8) et la paroi extérieure (6) au moins un premier écran d'étranglement (31) entre la paroi arrière (8) et la paroi extérieure (6) est appliqué respectivement contre celles-ci de façon que l'air aspiré par le ventilateur (11) à travers les orifices de ventilation (12) de la paroi arrière (8), après avoir traversé l'écran d'étranglement (31), soit conduit à travers l'orifice (21) dans le volume intérieur (7).

2. Armoire de simulation (1) selon la revendication 1,
**caractérisée en ce que**
deux écrans d'étranglement (31, 32) sont prévus entre la paroi arrière (8) et la paroi extérieure (6).

3. Armoire de simulation (1) selon la revendication 1 ou 2,
**caractérisée en ce que**
la paroi arrière (8) et au moins l'un des écrans d'étranglement (31, 32) sont reliés en une seule pièce.

4. Armoire de simulation (1) selon l'une des revendications précédentes,
**caractérisée en ce qu'**
au moins l'un des écrans d'étranglement (31, 32) a principalement une longueur qui correspond la distance entre la paroi de dessous (4) et la paroi de dessus (5) de l'armoire de simulation (1).

5. Armoire de simulation (1) selon l'une des revendications précédentes,
**caractérisée en ce qu'**
au moins l'un des écrans d'étranglement (31, 32) fait un angle (α) pratiquement égal à 90° respectivement par rapport à la paroi arrière (8) et la paroi extérieure (6).

6. Armoire de simulation (1) selon l'une des revendications précédentes,
**caractérisée en ce qu'**
au moins l'un des écrans d'étranglement (31, 32) est une tôle perforée.

7. Armoire de simulation (1) selon l'une des revendications précédentes,
**caractérisée en ce que**
la paroi arrière (8) comporte plusieurs orifices (21) située dans l'environnement (41, 42, 43, 44) des points d'intersections (s1, s2, s3, s4) des arêtes latérales de parois arrières (k1, k2, k3, k4),
l'extension longitudinale des environnements (41, 42, 43, 44) représente moins de tiers de la longueur d'une arête latérale de paroi arrière (k1, k2, k3, k4).

8. Armoire de simulation (1) selon l'une des revendications précédentes,
**caractérisée en ce qu'**
au moins l'un des orifices (21) dans la direction (x) paroi de dessous-parois de dessus, a respectivement une extension plus grande que dans la direction (y) paroi latérale-paroi latérale.

9. Armoire de simulation (1) selon l'une des revendications précédentes,
**caractérisée en ce que**
la paroi arrière (8) comporte, dans un environnement (41, 42, 43, 44) de chaque point d'intersection (s1, s2, s3, s4) des arêtes latérales de la paroi arrière (k1, k2, k3, k4), chaque fois au moins un orifice (21) de préférence une paire (22) d'orifice (21),
- une paire (22) d'au moins deux orifices (21) écartés dans la direction (y) paroi latérale-paroi latérale, orientée de préférence pratiquement parallèlement.

10. Armoire de simulation (1) selon la revendication 9,
**caractérisée en ce que**
un environnement (41, 42, 43) d'un premier (s1), d'un second (s2) et d'un troisième (s3) point d'intersection des arêtes de paroi arrière (k1, k2, k3, k4) comporte chaque fois précisément une paire (22) d'orifices (21) et l'environnement (44) d'un quatrième point d'intersection (s4) des arêtes latérales de parois arrière (k3, k4) comporte plusieurs paires (22) d'orifices (21) de préférence trois, et dans l'environnement (44) du quatrième point d'intersection (s4), les paires (22) sont dans la direction (x) paroi de dessous-paroi de dessus.

11. Armoire de simulation (1) selon la revendication 10,
**caractérisée en ce que**
chacune des paires (22) dans l'environnement (44) du quatrième point d'intersection (s4) est pratiquement équidistante à l'arête de paroi arrière (k2, k4) parallèle à la direction (x) paroi de dessous-paroi de dessus.

12. Armoire de simulation (1) selon la revendication 10 ou 11,
**caractérisée en ce que**
les paires voisines des paires (22) dans l'environnement (44) du quatrième point d'intersection (s4) sont équidistantes dans la direction (x) paroi de dessous-paroi de dessus.

13. Armoire de simulation (1) selon l'une des revendications 7 à 12,
**caractérisée en ce que**
les orifices (21) ont pratiquement la même surface.

14. Armoire de simulation (1) selon l'une des revendications précédentes,
**caractérisée en ce que**
la paroi arrière (8) comporte un élément de guidage d'air (13) situé avec une première arête latérale (13a) contre la paroi arrière (8) et avec une seconde arête latérale (13b) contre au moins un écran d'étranglement (31,32).

15. Armoire de simulation (1) selon l'une des revendications précédentes,
**caractérisée en ce que**
pour le montage de la paroi arrière (8) et au moins d'un écran d'étranglement (31, 32) dans l'armoire de simulation (1), la première arête latérale (13a) de l'élément de guidage d'air (13) s'applique contre une paroi latérale (2, 3) l'armoire de simulation (1) et la seconde arête latérale (13b) de l'élément de guidage d'air (13) s'applique contre la paroi extérieure (6) de l'armoire de simulation (1).

16. Armoire de simulation (1) selon l'une des revendications 14 à 15,
**caractérisée en ce que**
l'élément de guidage d'air (13) fait avec la paroi arrière (8) et l'écran d'étranglement adjacent (31, 32) chaque fois un angle (β) pratiquement égal à 45°.

17. Armoire de simulation (1) selon l'une des revendications précédentes,
**caractérisée en ce qu'**
au moins une fente (51) est prévue entre la paroi arrière (8) et la paroi de dessus (5).

18. Armoire de simulation (1) selon l'une des revendications précédentes,
**caractérisée en ce qu'**
au moins une et de préférence deux fentes (52, 53) sont prévues entre la paroi arrière (8) et la paroi de dessous (4).

19. Armoire de simulation (1) selon l'une des revendications précédentes,
**caractérisée en ce qu'**
au moins un dispositif de chauffage (61) est prévu entre la paroi arrière (8) et la paroi extérieure (6) qui entoure le ventilateur (11),
le dispositif de chauffage (61) entourant le ventilateur (11) de préférence suivant une forme de spirale ou une forme annulaire.

20. Armoire de simulation (1) selon la revendication 19,
**caractérisée en ce que**
le ventilateur (11) est entouré par un premier (61) et second (62) dispositif de chauffage, le second dispositif de chauffage (62) entourant le ventilateur (11) ainsi que le premier dispositif de chauffage (61).

21. Armoire de simulation (1) selon la revendication 20,
**caractérisée en ce que**
le premier dispositif de chauffage (61) est en forme de spirale et le second dispositif de chauffage (62) est de forme annulaire.

22. Armoire de simulation (1) selon l'une des revendications précédentes,
**caractérisée en ce que**
les deux parois latérales opposées (2, 3) ont respectivement des souillures (71) pour servir d'appui à des grilles ou des tôles.

23. Armoire de simulation (1) selon l'une des revendications précédentes,
**caractérisée en ce que**
plusieurs ventilateurs (11, 11') sont prévus entre la paroi arrière (8) et la paroi extérieure (6), une cloison étant disposée entre les ventilateurs (11, 11').
